# EUROPÄISCHE PATENTSCHRIFT

(11) **EP 4 360 919 B1**
(45) Veröffentlichungstag und Bekanntmachung des Hinweises auf die Patenterteilung: **14.05.2025**
(21) Anmeldenummer: 22204754.0
(22) Anmeldetag: 31.10.2022
(51) Int. Cl.: B60G 7/00

(54) **FEDERLENKER**
SPRING LINK
BRAS DE SUSPENSION À RESSORT

(43) Veröffentlichungstag der Anmeldung: 01.05.2024
(73) Patentinhaber: Benteler Automobiltechnik GmbH, 33102 Paderborn (DE)
(72) Erfinder: Meyer, Stephan, 33605 Bielefeld (DE); Mielke, Oliver, 33184 Altenbeken (DE); Vogler, Dirk, Delbrück (DE)
(74) Vertreter: Ksoll, Peter

(56) Entgegenhaltungen:
- EP-A1- 3 722 121
- DE-A1- 102016 100 666
- DE-A1- 102019 102 493
- DE-A1- 102019 106 937
- DE-A1- 102020 007 875

## Beschreibung

Die Erfindung betrifft einen Federlenker für eine Radaufhängung eines Kraftfahrzeugs mit einem Lenkerkörper, der zwei zueinander parallele Seitenwandprofile aufweist, welche durch ein Federsitzblech verbunden sind.

Federlenker sind eine Ausführungsform von Fahrwerkslenkern, die zu den Komponenten einer Radaufhängung gehören. Federlenker werden auch als Traglenker bezeichnet. Federlenker müssen hohe radiale Kräfte, wie Brems- und Antriebskräfte aufnehmen. Zusätzlich stützen Federlenker im Zusammenwirken mit anderen Fahrwerkskomponenten das Gewicht eines Kraftfahrzeugs ab.

Federlenker weisen Krafteinleitungspunkte für Feder- und Dämpferkräfte auf. Insbesondere stützen sich Feder-/Dämpferelemente, wie ein Stoßdämpfer oder eine Schraubendruckfeder, an einem Federlenker ab.

Aus der DE 10 2012 100 719 A1 oder der DE 10 2013 222 234 A1 sind Federlenker bekannt bei dem die Lenkerkörper als umgeformte Stahlblechbauteile bzw. Schalenelemente ausgebildet sind.

Vergleichbare Ausführungsformen von Federlenkern gehen aus der DE 10 2016 100 666 A1 oder auch der DE 10 2009 042 403 A1 hervor.

Zum Stand der Technik zählt ferner durch die DE 10 2019 102 493 A1 ein Federlenker mit einem Lenkerkörper, der zwei Seitenwandprofile aufweist. Die Profile sind beabstandet zueinander gegenüberliegend angeordnet und mit zumindest einem Kunststoffelement aus faserverstärktem Kunststoff miteinander verbunden. Das Kunststoffelement ist dazu vorgesehen als Federsitz die Aufnahme einer Kraftfahrzeugfeder zu ermöglichen.

Weiterhin offenbart auch die DE 10 2019 106 937 A1 einen Federlenker mit einem Lenkerkörper mit zwei Seitenwandprofilen, die durch ein Verbindungsmittel miteinander verbunden sind, wobei das Verbindungsmittel einen Federsitz bildet.

Weiterhin zählen Federlenker durch die EP 3 722 121 A1 oder die DE 10 2020 007 875 A1 zum Stand der Technik.

Federlenker haben - wie einleitend bereits erwähnt - die Funktion, die beim Bremsen oder Beschleunigen entstehenden Drehmomente abzustützen und die aus einem Feder-/Dämpfer-Element wirkenden Kräfte aufzunehmen. Daher werden sehr hohe Anforderungen an die Steifigkeit eines Federlenkers gestellt. Andererseits sollen die Federlenker ein möglichst geringes Bauteilgewicht aufweisen. Insbesondere auf Seiten der ungefederten Radmassen wirkt sich ein geringes Gewicht vorteilhaft auf die Fahrdynamik eines Kraftfahrzeugs aus.

In dem Zielkonflikt zwischen den hohen Steifigkeitsanforderungen einerseits und der Forderung nach einem möglichst geringen Gewicht andererseits bei gleichzeitig rationeller Herstellung bringen die bekannten Bauarten von Federlenkern nicht die besten Voraussetzungen mit sich.

Der Erfindung liegt ausgehend vom Stand der Technik die Aufgabe zugrunde einen leichtbauenden, kostengünstigen und herstellungstechnisch vorteilhaften Federlenker aufzuzeigen, der die Belastungsanforderungen, insbesondere die hohen Steifigkeitsanforderungen zuverlässig erfüllt.

Die Lösung dieser Aufgabe besteht in einem Federlenker gemäß Anspruch 1.

Vorteilhafte Ausgestaltungen und Weiterbildungen des erfindungsgemäßen Federlenkers sind Gegenstand der abhängigen Ansprüche.

Ausgestaltungen und Modifikationen von Merkmalen des erfindungsgemäßen Federlenkers die einzeln oder in Kombination die Erfindung in technisch vorteilhafter Weise ausgestalten und/oder weiterbilden ergeben sich auch aus der Beschreibung und den beigefügten Zeichnungen.

Ein erfindungsgemäßer Federlenker weist einen Lenkerkörper auf, der zwei Seitenwandprofile aufweist, die durch ein sich quer von einem Seitenwandprofil zum anderen Seitenwandprofil erstreckendes Federsitzblech verbunden sind. Jedes Seitenwandprofil weist einen Seitensteg mit einem sich in Längsrichtung des Seitenstegs erstreckenden, nach außen gerichteten oberen Kragenabschnitt auf. Die Seitenwandprofile sind unterhalb des Federsitzblechs angeordnet. Die Seitenstege der Seitenwandprofile sind von der Ebene des Federsitzblechs vertikal gerichtet. Der obere Kragenabschnitt ist von der vertikalen Mittellängsebene weg nach außen umgestellt. Das Federsitzblech liegt jeweils mit einem seitlichen Längsrandabschnitt auf einem oberen Kragenabschnitt auf und ist mit dem oberen Kragenabschnitt gefügt.

Insbesondere ist das Federsitzblech mit den Seitenwandprofilen bzw. dem oberen Kragenabschnitt eines Seitenwandprofils stoffschlüssig gefügt, vorzugsweise verschweißt.

Begriffe wie oben, unten, oberseitig, unterseitig, horizontal, vertikal, längs, quer oder Längsrichtung und Querrichtung sowie Oberseite und Unterseite beziehen sich auf die bestimmungsgemäße Einbaulage und die Ausrichtung des Federlenkers in der Radaufhängung eines Kraftfahrzeugs.

Ein nach außen gerichteter Kragenabschnitt bedeutet, dass der Kragenabschnitt bezogen auf die vertikale Mittellängsebene des Lenkerkörpers vom Seitensteg quer nach außen, also von der vertikalen Mittellängsebene weg, gerichtet ist. Die Kragenabschnitte sind in Federlenkerquerachse (y-Achse) nach außen gerichtet.

Der Lenkerkörper des erfindungsgemäßen Federlenkers besteht aus drei Bauteilen, nämlich den beiden Seitenwandprofilen und dem oberen Federsitzblech. Das Federsitzblech bildet den Federsitz für eine Schraubendruckfeder. Der Federsitz liegt oberhalb der Seitenwandprofile.

Die beiden Seitenwandprofile sind in Federlenkerquerachse (y-Achse) mit Abstand parallel zueinander angeordnet.

Die dem Federsitzblech abgewandte Unterseite des Lenkerkörpers ist offen. Die beiden Seitenwandprofile sind oberseitig mit dem Federsitzblech gefügt und kragen frei von diesem weg.

Die Bauteile des Lenkerkörpers bestehen aus Stahl, insbesondere aus hoch- bzw. höherfestem Stahl. Besonders vorteilhaft bestehen die Bauteile des Lenkerkörpers aus einer Stahlsorte mit der Werkstoffnummer 1.0980. Hierbei handelt es sich um einen höherfesten Stahl zum Kaltumformen, der thermomechanisch gewalzt ist.

Das Federsitzblech sitzt bzw. liegt auf den Seitenwandprofilen. Auf diese Weise ergibt sich eine Federkrafteinleitung oberhalb der beiden Seitenwandprofile. Bei dem erfindungsgemäßen Federlenker ist ein hoher Federsitz realisiert, der oberhalb der seitlichen Kraftwirkungslinie angeordnet ist.

Die Seitenwandprofile weisen senkrecht orientierte bzw. zum Federsitzblech vertikal orientierte Seitenstege auf. Die Seitenstege erstrecken sich unterhalb der Federkrafteinleitung.

Die Schweißnähte einer stoffschlüssigen Fügung erstrecken sich im Spannungsschatten unterhalb des Federsitzblechs.

Die Seitenwandprofile des Lenkerkörpers sind spiegelsymmetrisch zueinander ausgebildet. Die Seitenwandprofile sind als Stanzpressbauteile hergestellt. Dies ist herstellungstechnisch besonders vorteilhaft.

Die dem Federsitzblech gegenüberliegende Unterseite des Lenkerkörpers ist offen. Durch den rationellen Aufbau des Lenkerkörpers und der funktionellen Gestaltung der Seitenwandprofile und des sich quer zwischen Seitenwandprofilen erstreckenden Federsitzblechs ist eine gewichtssparende Bauweise möglich. Gleichzeitig erfüllt der erfindungsgemäße Federlenker höchste Steifigkeitsanforderungen und ist sowohl dynamisch also statisch hoch belastbar. Hierzu trägt insbesondere die Ausgestaltung der Seitenwandprofile bei.

Die oberen Kragenabschnitte erstrecken sich jeweils über die Länge eines Seitenwandprofils.

In erfindungsgemäßer Ausführungsform weist jeder Seitensteg eines Seitenwandprofils einen sich in Längsrichtung des Seitenstegs erstreckenden nach außen gerichteten unteren Kragenabschnitt auf. Auch der untere Kragenabschnitt erstreckt sich über die Länge eines Seitenwandprofils.

Der obere Kragenabschnitt oder insbesondere der untere Kragenabschnitt kann eine gekrümmt verlaufende Ausrandkontur haben. Insbesondere kann die Breite des unteren Kragenabschnitts über dessen Länge variieren. In den unteren Kragenabschnitten sind vorzugsweise Montageöffnungen für die Befestigung eines Schutzelements, insbesondere eines Steinschlagschutzes, vorgesehen. In dieser Ausgestaltung hat ein unterer Kragenabschnitt neben der Funktion der Steifigkeitserhöhung eines Seitenwandprofils die Funktion eines Flansches für die Befestigung eines Steinschlagschutzes.

Der obere Kragenabschnitt und der untere Kragenabschnitt eines Seitenwandprofils gehen an einem ersten stirnseitigen Ende des Seitenwandprofils über einen bogenförmig verlaufenden Kragenabschnitt ineinander über. Auf diese Weise ist das Seitenwandprofil entlang des oberen Seitenrands und entlang des unteren Seitenrands sowohl am stirnseitigen Ende mit einem nach außen umgestellten umlaufendem Kragenabschnitt versehen. Lediglich das zweite stirnseitige Ende ist kragenlos ausgeführt. Der obere Kragenabschnitt, der untere Kragenabschnitt und der den oberen Kragenabschnitt und den unteren Kragenabschnitt verbindende bogenförmig verlaufende stirnseitige Kragenabschnitt bilden einen an drei Seitenrändern eines Seitenwandprofils umlaufenden nach außen gerichteten Rand aus. Die Ausgestaltung der Seitenwandprofile mit dem dreiseitig durchgehenden umgestellten Rand trägt wesentlich zum vorteilhaften Steifigkeitsverhalten des Federlenkers bei.

Weiterhin vorteilhaft ist, dass die Längsrandabschnitte des Federsitzblechs nach außen über die oberen Kragenabschnitte seitlich überstehen.

Das Steifigkeitsverhalten kann insbesondere durch eine Profilierung der Seitenwandprofile verbessert werden, insbesondere können auch Öffnungen und Lageraufnahmen umlaufende Kragen oder Kragenabschnitte aufweisen, die nach außen gerichtet sind.

Die mit Kragen versehenen Öffnungen und Lageraufnahmen sind nach Art von Durchzügen in den Seitenstegen der Seitenwandprofile ausgeführt.

Vorteilhafterweise weisen die oberen Kragenabschnitte und die unteren Kragenabschnitte sowie die stirnseitig verlaufenden bogenförmigen Kragenabschnitte ebenso wie die Kragen oder Kragenabschnitte an Lageraufnahmen und Öffnungen alle in die gleiche Richtung nach außen. Die Kragen und Kragenabschnitte sind von der vertikalen Mittellängsebene des Lenkerkörpers nach außen gerichtet.

Erfindungsgemäß weist jedes Seitenwandprofil einen ersten Endabschnitt und einen zweiten Endabschnitt auf. In zumindest einem Endabschnitt, insbesondere im ersten Endabschnitt jedes Seitenwandprofils ist jeweils eine Sicke vorgesehen, welche im Übergang vom oberen Kragenabschnitt zum Seitensteg ausgebildet ist. Die Sicke erstreckt sich dreiecksförmig im Seitensteg. Die Sicke ist abwärtsgerichtet ausgeformt und erstreckt sich etwa bis zur Mitte eines Seitenstegs.

Weiterhin weist das Federsitzblech eine gegenüber einer Federauflagefläche vorstehende Auswölbung auf. Die Auswölbung steht nach oben gegenüber der Federsitzfläche und den Seitenwandprofilen vor. Die Auswölbung dient zur Lageorientierung, insbesondere zur Zentrierung einer Schraubendruckfeder.

Eine weitere vorteilhafte Ausführungsform sieht vor, dass das Federsitzblech in einer quer zwischen den Seitenwandprofilen verlaufenden Stirnseite eine bogenförmig konturierte Ausnehmung aufweist. Auf diese Weise kann das Gewicht weiter reduziert werden. Zudem dienen die Ausnehmungen als Freimachung und gewährleisten die Zugänglichkeit zu Lageraufnahmen und/oder Anbindungspunkten oder auch die Durchführung von anderen Komponenten der Radaufhängung.

Eine für die Praxis besonders vorteilhafte Ausgestaltung sieht vor, dass in jedem ersten Endabschnitt eines Seitenwandprofils eine unrunde, insbesondere eine mehrkantige Öffnung vorgesehen ist. Die unrunden Öffnungen in den beiden Seitenwänden sind koaxial zueinander ausgerichtet und sind dafür eingerichtet und bestimmt mit einer Exzenterverstelleinrichtung zusammen zu wirken. Über die Exzenterverstelleinrichtung, die insbesondere Exzenterelemente wie Exzenterscheiben oder Exzenterschrauben und/oder Steuerelemente aufweist, kann eine Ausrichtung des Federlenkers relativ zur radträgerseitigen Anbindung erfolgen. Auf diese Weise können auch Spur und/oder Sturz eines Kraftfahrzeugs eingestellt werden.

Besonders vorteilhaft sind in dem ersten radträgerseitigen Endabschnitt zwei Öffnungen vorgesehen, die Bestandteil der Exzenterverstelleinrichtung sind. Hierbei sind in jedem zweiten Längsabschnitt ein Langloch und eine unrunde Öffnung mit einer trapezförmigen Konfiguration angeordnet. Das Langloch hat eine Längsachse, welche in Längsrichtung eines Seitenwandprofils orientiert ist. Die Hochachse der trapezförmigen unrunden Öffnung ist länger als die Querachse. Die Querachse erstreckt sind in Längsrichtung der Seitenwandprofile. Die Hochachse ist senkrecht dazu ausgerichtet.

An einer unrunden Öffnung, insbesondere an einer mehrkantigen Öffnung bzw. der unrunden Öffnung mit einer trapezförmigen Konfiguration, ist ein randseitiger Anschlag vorgesehen. Der randseitige Anschlag fungiert als Steuerbahn für ein Stellelement der Exzenterverstelleinrichtung.

Besonders vorteilhaft ist der Anschlag durch einen umlaufenden Kragen an der unrunden Öffnung mit trapezförmiger Konfiguration ausgebildet. Der Kragen ist nach außen gerichtet.

Die Erfindung ist nachfolgend anhand von in den Zeichnungen dargestellten Ausführungsbeispielen näher beschrieben. Es zeigen:
- Figur 1: einen erfindungsgemäßen Federlenker in einer perspektivischen Darstellung;
- Figur 2: den Federlenker gemäß der Darstellung von Figur 1 in einer Perspektive schräg von oben;
- Figur 3: den Federlenker in einer perspektivischen Ansicht von unten;
- Figur 4: einen Ausschnitt aus dem Lenkerkörper des Federlenkers mit der Darstellung eines radträgerseitigen Lagerabschnitts des Lenkerkörpers und
- Figur 5: einen Ausschnitt des Federlenkers mit der Darstellung des fahrzeugaufbauseitigen Lagerabschnitts des Lenkerkörpers.

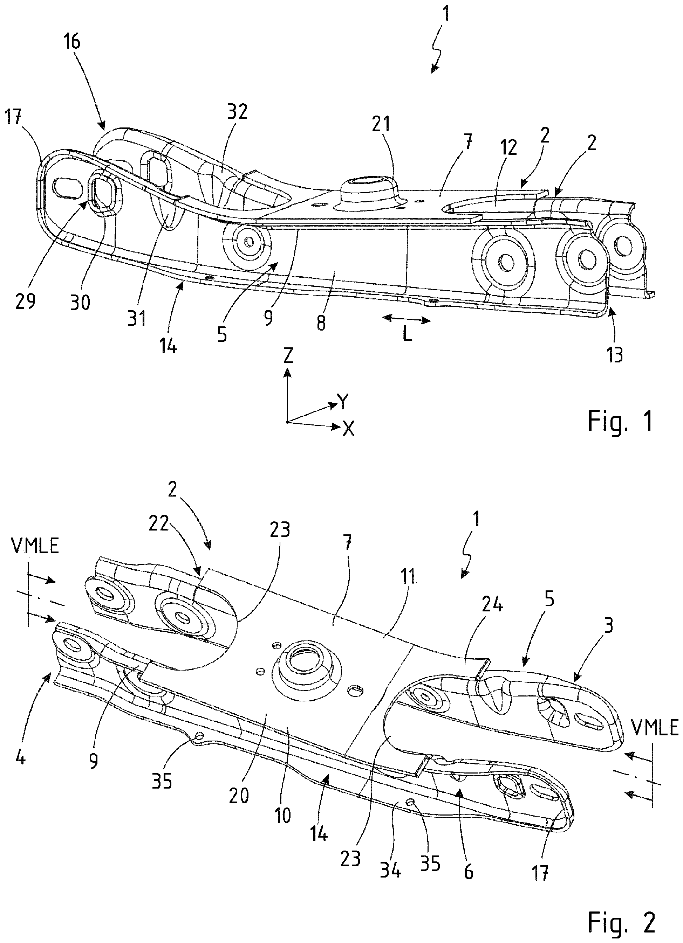

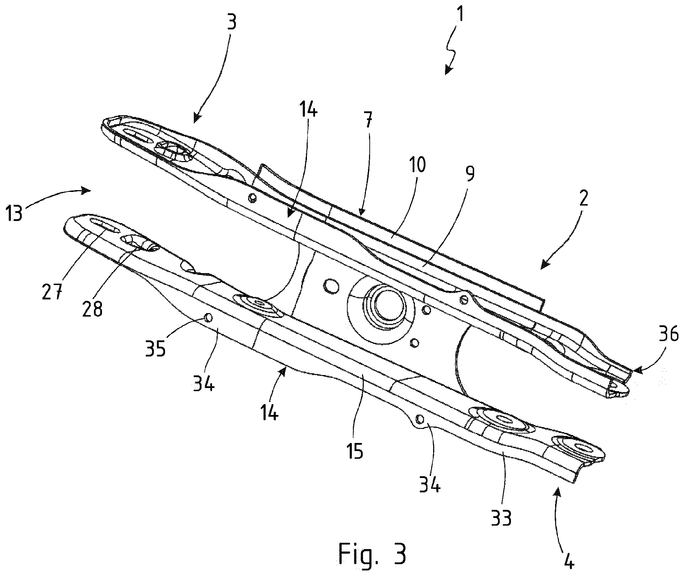

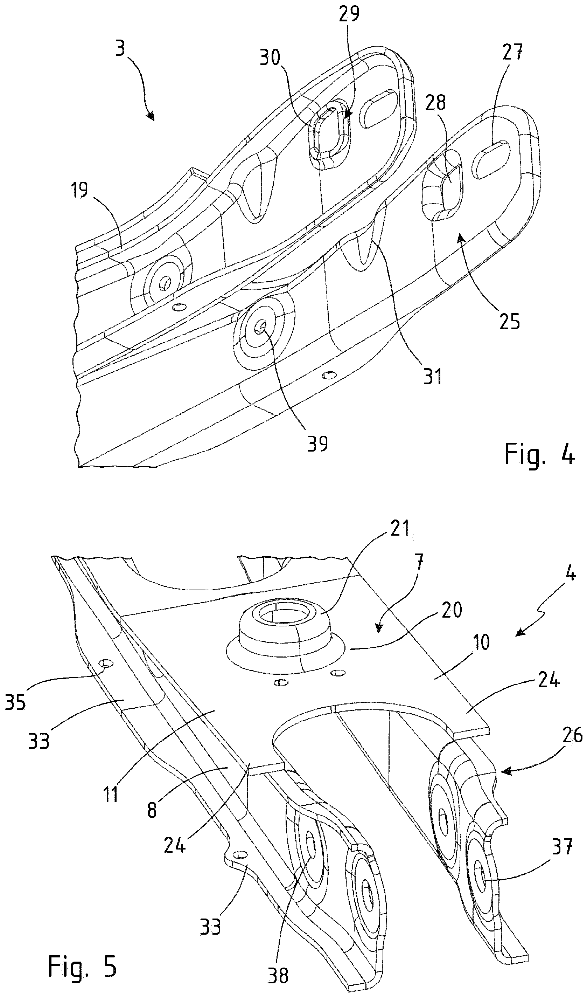

Anhand der Figuren 1 bis 5 ist ein erfindungsgemäßer Federlenker 1 beschrieben.

In der Figur 1 ist ein Koordinatensystem dargestellt, um in der Konstruktion des Federlenkers 1 die Lage der einzelnen Bauteile zu definieren. Die x-Achse entspricht der Federlenkerlängsachse, die y-Achse der Federlenkerquerachse und die z-Achse entspricht der Federlenkerhochachse.

Der Federlenker 1 besitzt einen Lenkerkörper 2, welcher einen radträgerseitigen Lagerabschnitt 3 und einen fahrzeugaufbauseitigen Lagerabschnitt 4 aufweist.

Der Lenkerkörper 2 besteht aus zwei Seitenwandprofilen 5, 6, welche durch ein oberes Federsitzblech 7 verbunden sind.

Die Seitenwandprofile 5, 6 des Lenkerkörpers 2 sind spiegelsymmetrisch zueinander ausgebildet. Die Seitenwandprofile 5, 6 und das Federsitzblech 7 bestehen aus einem höchstfesten Stahlwerkstoff.

Jedes Seitenwandprofil 5, 6 weist einen Seitensteg 8 mit einem sich in Längsrichtung L des Seitenstegs 8 erstreckenden nach außen gerichteten oberen Kragenabschnitt 9 auf. Die Seitenwandprofile 5, 6 sind in y-Achse mit Abstand zueinander parallel angeordnet. Das Federsitzblech 7 liegt mit seitlichen Längsrandabschnitten 10, 11 jeweils auf einem oberen Kragenabschnitt 9 eines Seitenwandprofils 5, 6 auf. Das Federsitzblech 7 und die Seitenwandprofile 5, 6 bzw. oberen Kragenabschnitte 9 sind miteinander stoffschlüssig gefügt.

Die oberen Kragenabschnitte 9 sind in Federlenkerquerachse (y-Achse) vom Seitensteg 8 nach außen umgestellt bzw. gerichtet.

Die entlang der oberen Seitenränder 12 des Seitenstegs 8 verlaufenden oberen Kragenabschnitte 9 erstrecken sich über die gesamte Länge eines Seitenwandprofils 5, 6. Die Kragenabschnitte 9 sind bezogen auf die vertikalen Mittellängsebene VMLE des Lenkerkörpers 2 nach außen gerichtet. Die vertikale Mittellängsebene VMLE bildet auch die Symmetrieebene der Seitenwandprofile 5, 6.

Der Lenkerkörper 2 besteht aus drei Bauteilen, nämlich den beiden mit Abstand zueinander parallel angeordneten Seitenwandprofilen 5, 6 und dem sich quer zwischen den Seitenwandprofilen 5, 6 erstreckenden und die Seitenwandprofile 5, 6 verbindenden Federsitzblech 7.

Die dem Federsitzblech 7 gegenüberliegende Unterseite 13 des Lenkerkörpers 2 ist offen.

Jeder Seitensteg 8 eines Seitenwandprofils 5, 6 weist einen sich in Längsrichtung L des Seitenstegs 8 erstreckende nach außen gerichteten unteren Kragenabschnitt 14 auf. Die unteren Kragenabschnitte 14 verlaufen am unteren Seitenrand 15 des Seitenstegs 8 über die Länge eines Seitenwandprofils 5, 6.

Der obere Kragenabschnitt 9 und der untere Kragenabschnitt 14 eines Seitenwandprofils 5, 6 gehen an einem ersten stirnseitigen Ende 16 der Seitenwandprofile 5, 6 über einen bogenförmig verlaufenden Kragenabschnitt 17 ineinander über. Auf diese Weise bilden der obere Kragenabschnitt 9, der bogenförmige Kragenabschnitt 17 und der untere Kragenabschnitt 14 einen an drei Seiten eines Seitenwandprofils 5, 6 durchgehenden, nach außen gerichteten Rand 18 aus.

Die Längsrandabschnitte 10, 11 des Federsitzblechs 7 liegen auf den oberen Kragenabschnitten 9 auf und sind mit diesen gefügt. Seitlich stehen die Längsrandabschnitte 10, 11 des Federsitzblechs 7 über die Außenränder 19 der Kragenabschnitte 9 über.

Das Federsitzblech 7 weist eine gegenüber einer Federauflagefläche 20 vorstehende Auswölbung 21 auf. Die Auswölbung 21 dient als Zentrierung und Lagerorientierung für eine auf der Federauflagefläche 20 positionierte Schraubendruckfeder.

Die einen Federsitz bildende Federauflagefläche 20 liegt oberhalb der Seitenwandprofile 5, 6.

Das Federsitzblech 7 weist an seinen beiden, jeweils quer zwischen den Seitenwandprofilen 5, 6 verlaufenden Stirnseiten 22 jeweils eine bogenförmig konturierte Ausnehmung 23 auf. Die Ausnehmung 23 dient zur Durchführung von Anbaukomponenten wie Stabilisatoren und Stoßdämpferbeinen.

Durch die Ausnehmung 23 sind die Stirnseiten 22 des Federsitzbleches 7 gabelartig bzw. U-förmig gestaltet mit sich in Längsrichtung L der Seitenwandprofile 5, 6 erstreckenden auf den oberen Kragenabschnitten 9 aufliegenden Flanschstegen 24.

Die Seitenwandprofile 5, 6 weisen jeweils einen radträgerseitigen ersten Endabschnitt 25 und einen fahrzeugaufbauseitigen zweiten Endabschnitt 26 auf.

Im radträgerseitigen Lagerabschnitt 3 des Lenkerkörpers 2 sind in den ersten Endabschnitten 25 der Seitenwandprofile 5, 6 jeweils zwei unrunde Öffnungen 27 und 28 vorgesehen. Bei der ersten unrunden Öffnung 27 handelt es sich um ein Langloch. Die zweite unrunde Öffnung 28 weist eine trapezförmige Konfiguration auf. Die zweite unrunde Öffnung 28 ist auf der vom stirnseitigen Ende 16 der Seitenwandprofile 5, 6 weggerichteten Seite der ersten Öffnung 27 positioniert. An der unrunden Öffnung 28 mit trapezförmiger Konfiguration ist ein randseitiger Anschlag 29 durch einen umlaufenden Kragen 30 ausgebildet. Der Kragen 30 ist nach außen gerichtet. Der Kragen 30 verläuft folglich in die gleiche Richtung orientiert wie der obere Kragenabschnitt 9 und der untere Kragenabschnitt 14 ebenso wie der bogenförmige Kragenabschnitt 17.

Die in den Seitenwandprofilen 5, 6 jeweils einander gegenüberliegenden unrunden Öffnungen 27, 28 sind koaxial zueinander angeordnet. Die beiden Öffnungen 27, 28 sind dafür eingerichtet und bestimmt mit einer Exzenterverstelleinrichtung zusammen zu wirken. Die Exzenterverstelleinrichtung umfasst Stellelemente mit zylinderischen Verbindungselementen, die durch die Öffnungen 27, 28 geführt werden. Mittels der Exzenterverstelleinrichtung kann die Lage und Position des radträgerseitigen Lagerabschnitts 3 relativ zu einem Radträger eingestellt werden.

Einwärts in Richtung zum Federsitzblech 7, benachbart zu den unrunden Öffnungen 28 ist jeweils im ersten Endabschnitt 25 eines Seitenwandprofils 5, 6 eine Sicke 31 vorgesehen. Die Sicke 31 ist im Übergang 32 vom oberen Kragenabschnitt 9 zum Seitensteg 8 ausgebildet. Die Sicke 31 erstreckt sich dreiecksförmig, abwärts gerichtet im Seitensteg 8 bis etwa zu dessen Mitte.

Der untere Kragenabschnitt 14 weist über seinen Längsverlauf Abschnitte 33, 34 mit unterschiedlicher Breite auf. In mittleren Abschnitten 34 ist der Kragenabschnitt 14 breiter ausgeführt als im Bereich der Endabschnitte 25 und 26.

In den unteren Kragenabschnitten 14 sind Montagelöcher 35 vorgesehen. An den Montageöffnungen 35 kann ein Steinschlagschutz befestigt werden. Hierbei fungieren die breiteren Abschnitte 34 des unteren Kragenabschnitts 14 als Flansch für die Montage.

Auch die oberen Kragenabschnitte 9 weisen in ihrem Längsverlauf eine unterschiedliche Breite auf. Im mittleren Längenbereich besitzen die oberen Kragenabschnitte 9 die größte Breite. Zum stirnseitigen Ende 16 und dem bogenförmig verlaufenden Kragenabschnitt 17 hin, verjüngen sich die oberen Kragenabschnitte 9. Auch im zweiten Endabschnitt 26 verjüngen sich die oberen Kragenabschnitte 9 zum freien Ende 36 hin.

Im Lenkerkörper 2 bzw. den Seitenwandprofilen 5, 6 sind des Weiteren Lageröffnungen 37 zur Montage eines Gummilagers, Lageröffnungen 38 für die Anbindung von Stabilisatorelementen sowie Lageröffnungen 39 für die Anbindung eines Stoßdämpfers vorgesehen.

Komplettiert wird der Federlenker 1 durch in den Figuren nicht dargestellte Lagerbauteile und Lager- oder Anbindungskomponenten für beispielsweise ein Gummimetalllager, Stabilisatoren, einem Stoßdämpfer und eine Radträgerbefestigung, welche eine Exzenterverstelleinrichtung umfasst.

Die beiden mit Abstand zueinander angeordneten Seitenwandprofile 5, 6 sind durch das Federsitzblech 7 direkt verbunden. Ansonsten wird eine Verbindung zwischen den beiden Seitenwandprofilen 5, 6 mittelbar über Lagerbauteile und/oder Anbindungskomponenten hergestellt, die an den Lageröffnungen 37, 38, 39 montiert sind.

### Bezugszeichen:

- 1 -: Federlenker
- 2 -: Lenkerkörper
- 3 -: radträgerseitiger Lagerabschnitt
- 4 -: fahrzeugaufbauseitiger Lagerabschnitt
- 5 -: Seitenwandprofil
- 6 -: Seitenwandprofil
- 7 -: Federsitzblech
- 8 -: Seitensteg
- 9 -: oberer Kragenabschnitt
- 10 -: Längsrandabschnitt von 7
- 11 -: Längsrandabschnitt von 7
- 12 -: oberer Seitenrand von 8
- 13 -: Unterseite von 2
- 14 -: unterer Kragenabschnitt
- 15 -: unterer Seitenrand von 8
- 16 -: stirnseitiges Ende von 5, 6
- 17 -: bogenförmiger Kragenabschnitt an 16
- 18 -: Rand
- 19 -: Außenränder von 9
- 20 -: Federauflagefläche
- 21 -: Auswölbung
- 22 -: Stirnseite von 7
- 23 -: Ausnehmung
- 24 -: Flanschsteg
- 25 -: erster Endabschnitt von 5, 6
- 26 -: zweiter Endabschnitt von 5, 6
- 27 -: Öffnung
- 28 -: Öffnung
- 29 -: Anschlag
- 30 -: Kragen
- 31 -: Sicke
- 32 -: Übergang
- 33 -: Abschnitt
- 34 -: Abschnitt
- 35 -: Montageöffnung
- 36 -: freies Ende
- 37 -: Lageröffnung
- 38 -: Lageröffnung
- 39 -: Lageröffnung

- L -: Längsrichtung
- VMLE -: vertikale Mittellängsebene

## Patentansprüche

1. Federlenker mit einem Lenkerkörper (2), der zwei Seitenwandprofile (5, 6) aufweist, welche durch ein Federsitzblech (7) verbunden sind, wobei jedes Seitenwandprofil (5, 6) einen Seitensteg (8) mit einem sich in Längsrichtung (L) des Seitenstegs (8) erstreckenden nach außen gerichteten oberen Kragenabschnitt (9) aufweist, **dadurch gekennzeichnet, dass** jedes Seitenwandprofil (5, 6) einen Seitensteg (8) mit einem sich in Längsrichtung (L) des Seitenstegs (8) erstreckenden nach außen gerichteten unteren Kragenabschnitt (14) aufweist und jedes Seitenwandprofil (5, 6) einen ersten Endabschnitt (25) und einen zweiten Endabschnitt (26) aufweist, wobei in zumindest einem Endabschnitt (25) eine Sicke (31) vorgesehen ist, welche im Übergang vom oberen Kragenabschnitt (9) zum Seitensteg (8) ausgebildet ist, wobei sich die Sicke dreiecksförmig, abwärts gerichtet im Seitensteg (8) bis etwa zu dessen Mitte erstreckt und wobei das Federsitzblech (7) jeweils mit einem seitlichen Längsrandabschnitt (10, 11) auf einem oberen Kragenabschnitt (9) liegt und mit dem oberen Kragenabschnitt (9) gefügt ist.

2. Federlenker nach Anspruch 1, **dadurch gekennzeichnet, dass** die Seitenwandprofile (5, 6) spiegelsymmetrisch zueinander ausgebildet sind.

3. Federlenker nach Anspruch 1 oder 2, **dadurch gekennzeichnet, dass** die dem Federsitzblech (7) gegenüberliegende Unterseite (13) des Lenkerkörpers (2) offen ist.

4. Federlenker nach einem der Ansprüche 1 bis 3, **dadurch gekennzeichnet, dass** sich die oberen Kragenabschnitte (9) jeweils über die Länge (L) eines Seitenwandprofils (5, 6) erstrecken.

5. Federlenker nach einem der Ansprüche 1 bis 4, **dadurch gekennzeichnet, dass** sich die unteren Kragenabschnitte (14) jeweils über die Länge (L) eines Seitenwandprofils (5, 6) erstrecken.

6. Federlenker nach einem der Ansprüche 1 bis 5, **dadurch gekennzeichnet, dass** der obere Kragenabschnitt (9) und der untere Kragenabschnitt (14) eines Seitenwandprofils (5, 6) an einem ersten stirnseitigen Ende (16) des Seitenwandprofils (5, 6) über einen bogenförmig verlaufenden Kragenabschnitt (17) ineinander übergehen.

7. Federlenker nach einem der Ansprüche 1 bis 6, **dadurch gekennzeichnet, dass** die Längsrandabschnitte (10, 11) des Federsitzblechs (7) bereichsweise nach außen über die oberen Kragenabschnitte (14) seitlich überstehen.

8. Federlenker nach einem der Ansprüche 1 bis 7, **dadurch gekennzeichnet, dass** das Federsitzblech (7) eine gegenüber einer Federauflagefläche (20) vorstehende Auswölbung (21) aufweist.

9. Federlenker nach einem der Ansprüche 1 bis 8, **dadurch gekennzeichnet, dass** das Federsitzblech (7) in einer quer zwischen den Seitenwandprofilen (5, 6) verlaufenden Stirnseite (22) eine bogenförmig konturierte Ausnehmung (23) aufweist.

10. Federlenker nach einem der Ansprüche 1 bis 9, **dadurch gekennzeichnet, dass** in jedem ersten Endabschnitt (25) eines Seitenwandprofils (5, 6) zumindest eine unrunde Öffnung (27) vorgesehen ist, wobei die unrunden Öffnungen (27, 28) in den Seitenwänden koaxial zueinander angeordnet sind und dafür eingerichtet und bestimmt sind mit einer Exzenterverstelleinrichtung zusammenzuwirken.

11. Federlenker nach Anspruch 10, **dadurch gekennzeichnet, dass** an einer unrunden Öffnung (28) ein randseitiger Anschlag (29) vorgesehen ist.

12. Federlenker nach Anspruch 11, **dadurch gekennzeichnet, dass** der Anschlag (29) durch einen umlaufenden Kragen (30) an der unrunden Öffnung (28) ausgebildet ist.

13. Federlenker nach einem der Ansprüche 1 bis 12, **dadurch gekennzeichnet, dass** der untere Kragenabschnitt (14) über seinen Längsverlauf Abschnitte (33, 34) mit unterschiedlicher Breite aufweist, wobei der untere Kragenabschnitt (14) im mittleren Abschnitt (34) breiter ausgeführt ist als im Bereich seiner Endabschnitte (25, 26).

14. Federlenker nach einem der Ansprüche 1 bis 13, **dadurch gekennzeichnet, dass** die oberen Kragenabschnitte (9) in ihrem Längsverlauf eine unterschiedliche Breite aufweisen, wobei die oberen Kragenabschnitte (9) im mittleren Längenbereich die größte Breite besitzen.

## Claims

1. A spring link with a link body (2) which has two side wall profiles (5, 6) which are connected by a spring seat plate (7), wherein each side wall profile (5, 6) has a side web (8) with an outwardly directed upper collar portion (9) extending in the longitudinal direction (L) of the side web (8), **characterized in that** each side wall profile (5, 6) has a side web (8) with an outwardly directed lower collar portion (14) extending in the longitudinal direction (L) of the side web (8), and each side wall profile (5, 6) has a first end portion (25) and a second end portion (26),wherein in at least one end portion (25) a bead (31) is provided, which is formed in the transition from the upper collar portion (9) to the side web (8), wherein the bead extends triangularly, downwards in the side web (8) to approximately its middle and wherein the spring seat plate (7) lies with a lateral longitudinal edge portion (10, 11) on an upper collar portion (9) and is joined to the upper collar portion (9).

2. The spring link according to claim 1, **characterized in that** the side wall profiles (5, 6) are formed mirror-symmetrically to one another.

3. The spring link according to claim 1 or 2, **characterized in that** the underside (13) of the link body (2) opposite the spring seat plate (7) is open.

4. The spring link according to any one of claims 1 to 3, **characterized in that** the upper collar portions (9) each extend over the length (L) of a side wall profile (5, 6).

5. The spring link according to any one of claims 1 to 4, **characterized in that** the lower collar portions (14) each extend over the length (L) of a side wall profile (5, 6).

6. The spring link according to any one of claims 1 to 5, **characterized in that** the upper collar portion (9) and the lower collar portion (14) of a side wall profile (5, 6) merge into one another at a first front end (16) of the side wall profile (5, 6) via an arcuate collar portion (17).

7. The spring link according to any one of claims 1 to 6, **characterized in that** the longitudinal edge portions (10, 11) of the spring seat plate (7) project laterally outwards over the upper collar portions (14) in some areas.

8. The spring link according to any one of claims 1 to 7, **characterized in that** the spring seat plate (7) has a bulge (21) projecting relative to a spring support surface (20).

9. The spring link according to any one of claims 1 to 8, **characterized in that** the spring seat plate (7) has an arcuately contoured recess (23) in an end face (22) extending transversely between the side wall profiles (5, 6).

10. The spring link according to any one of claims 1 to 9, **characterized in that** in each first end portion (25) of a side wall profile (5, 6) at least one non-circular opening (27) is provided, wherein the non-circular openings (27, 28) in the side walls are disposed coaxially to one another and are configured and intended to cooperate with an eccentric adjustment apparatus.

11. The spring link according to claim 10, **characterized in that** an edge-side stop (29) is provided on a non-circular opening (28).

12. The spring link according to claim 11, **characterized in that** the stop (29) is formed by a circumferential collar (30) on the non-circular opening (28).

13. The spring link according to any one of claims 1 to 12, **characterized in that** the lower collar portion (14) has portions (33, 34) of different widths over its longitudinal extent, wherein the lower collar portion (14) is wider in the middle portion (34) than in the region of its end portions (25, 26).

14. The spring link according to any one of claims 1 to 13, **characterized in that** the upper collar portions (9) have a different width in their longitudinal course, wherein the upper collar portions(9) have the greatest width in the middle length region.

## Revendications

1. Bras de suspension à ressort avec un corps de bras (2), qui présente deux profilés de paroi latérale (5, 6) qui sont reliés par une tôle (7) formant siège de ressort, dans lequel chaque profilé de paroi latérale (5, 6) présente une barre latérale (8) avec une portion de rebord supérieure (9) dirigée vers l'extérieur, s'étendant dans le sens longitudinal (L) de la barre latérale (8), **caractérisé en ce que** chaque profilé de paroi latérale (5, 6) présente une barre latérale (8) avec une portion de rebord inférieure (14) dirigée vers l'extérieur, s'étendant dans le sens longitudinal (L) de la barre latérale (8) et chaque profilé de paroi latérale (5, 6) présente une première portion d'extrémité (25) et une deuxième portion d'extrémité (26), dans lequel une moulure (31) est prévue dans au moins une portion d'extrémité (25), laquelle est formée dans la transition entre la portion de rebord supérieure (9) et la barre latérale (8), dans lequel la moulure s'étend en forme de triangle, de manière dirigée vers le bas dans la barre latérale (8) jusqu'à environ son milieu, et la tôle (7) formant siège de ressort se situe respectivement par une portion latérale de bord longitudinal (10, 11) sur une portion de rebord supérieure (9) et est assemblée à la portion de rebord supérieure (9).

2. Bras de suspension à ressort selon la revendication 1, **caractérisé en ce que** les profilés de paroi latérale (5, 6) sont formées de manière symétrique en miroir les uns par rapport aux autres.

3. Bras de suspension à ressort selon la revendication 1 ou la revendication 2, **caractérisé en ce que** la face inférieure (13) du corps de bras (2) opposée à la tôle (7) formant siège de ressort est ouverte.

4. Bras de suspension à ressort selon l'une quelconque des revendications 1 à 3, **caractérisé en ce que** les sections de rebord supérieures (9) s'étendent respectivement sur la longueur (L) d'un profilé de paroi latérale (5, 6).

5. Bras de suspension à ressort selon l'une quelconque des revendications 1 à 4, **caractérisé en ce que** les sections de rebord inférieures (14) s'étendent respectivement sur la longueur (L) d'un profilé de paroi latérale (5, 6).

6. Bras de suspension à ressort selon l'une quelconque des revendications 1 à 5, **caractérisé en ce que** la portion de rebord supérieure (9) et la portion de rebord inférieure (14) d'un profilé de paroi latérale (5, 6) se rejoignent sur une première extrémité frontale (16) du profilé de paroi latérale (5, 6) par l'intermédiaire d'une portion de rebord (17) s'étendant en forme d'arc.

7. Bras de suspension à ressort selon l'une quelconque des revendications 1 à 6, **caractérisé en ce que** les sections de bord longitudinal (10, 11) de la tôle (7) formant siège de ressort dépassent latéralement par endroits vers l'extérieur au-dessus des sections de rebord supérieures (14).

8. Bras de suspension à ressort selon l'une quelconque des revendications 1 à 7, **caractérisé en ce que** la tôle (7) formant siège de ressort présente un bombement convexe (21) faisant saillie par rapport à une surface d'appui de ressort (20).

9. Bras de suspension à ressort selon l'une quelconque des revendications 1 à 8, **caractérisé en ce que** la tôle (7) formant siège de ressort présente un évidement (23) à contour en forme d'arc dans une face frontale (22) s'étendant transversalement entre les profilés de paroi latérale (5, 6).

10. Bras de suspension à ressort selon l'une quelconque des revendications 1 à 9, **caractérisé en ce qu'**au moins une ouverture non ronde (27) est prévue dans chaque première portion d'extrémité (25) d'un profilé de paroi latérale (5, 6), dans lequel les ouvertures non rondes (27, 28) dans les parois latérales sont disposées de manière coaxiale l'une par rapport à l'autre et sont mises au point et se destinent à coopérer avec un dispositif de réglage excentrique.

11. Bras de suspension à ressort selon la revendication 10, **caractérisé en ce qu'**une butée côté bord (29) est prévue sur une ouverture non ronde (28).

12. Bras de suspension à ressort selon la revendication 11, **caractérisé en ce que** la butée (29) est formée par un rebord périphérique (30) sur l'ouverture non ronde (28).

13. Bras de suspension à ressort selon l'une quelconque des revendications 1 à 12, **caractérisé en ce que** la portion de rebord inférieure (14) présente, sur son tracé longitudinal, des sections (33, 34) de largeur différente, dans lequel la portion de rebord inférieure (14) est réalisée plus large dans la section centrale (34) que dans la zone de ses sections d'extrémité (25, 26).

14. Bras de suspension à ressort selon l'une quelconque des revendications 1 à 13, **caractérisé en ce que** les sections de rebord supérieures (9) présentent une largeur différente dans leur tracé longitudinal, dans lequel les sections de rebord supérieures (9) possèdent la plus grande largeur dans la zone longitudinale centrale.
